# EUROPEAN PATENT APPLICATION

(11) **EP 4 841 495 A1**
(43) Date of publication of application: **18.11.2026**
(21) Application number: 25738360.4
(22) Date of filing: 06.01.2025
(51) Int. Cl.: G06F 30/20, G21C 5/00, G06F 30/17, G06F 119/06

(54) **REACTOR CORE STATE PARAMETER DETERMINATION METHOD AND APPARATUS, DEVICE, AND STORAGE MEDIUM**

(30) Priority: 10.01.2024 CN 202410035941
(71) Applicant: China Nuclear Power Technology Research Institute Co., Ltd., Shenzhen, Guangdong 518031 (CN)
(72) Inventor: LI, Xuezhong, Shenzhen, Guangdong 518031 (CN); HE, Mingtao, Shenzhen, Guangdong 518031 (CN); LI, Zhijun, Shenzhen, Guangdong 518031 (CN); CAI, Dechang, Shenzhen, Guangdong 518031 (CN); ZHAO, Changyou, Shenzhen, Guangdong 518031 (CN); WANG, Xinxin, Shenzhen, Guangdong 518031 (CN); LI, Zhifeng, Shenzhen, Guangdong 518031 (CN); WEI, Jinfeng, Shenzhen, Guangdong 518031 (CN)
(74) Representative: Zacco Sweden AB
(86) International application number: PCT/CN2025/070752
(87) International publication number: WO 2025/148829

(57) **Abstract**

The present application relates to a reactor core state parameter determination method and apparatus, a device, and a storage medium. The method comprises: obtaining a measured reactor core power distribution of a target nuclear reactor; on the basis of the measured reactor core power distribution, adjusting the water gap width of each fuel assembly in a three-dimensional reactor core correction physical model of the target nuclear reactor to obtain a reactor core correction physical model of the target nuclear reactor, wherein the deviation between a reactor core power distribution calculated by the reactor core correction physical model and the measured reactor core power distribution is less than a preset value; and calculating the reactor core power distribution of the target nuclear reactor by means of the reactor core correction physical model. Use of the method can accurately calculate the reactor core power distribution of a nuclear reactor.

## Description

### RELATED APPLICATIONS:

This application claims priority to Chinese patent application No. 2024100359412, entitled "REACTOR CORE STATE PARAMETER DETERMINATION METHOD AND APPARATUS, DEVICE, AND STORAGE MEDIUM" filed on January 10, 2024, the content of which is hereby incorporated by reference in its entirety.

### TECHNICAL FIELD

The present application relates to the field of reactor core monitoring, and in particular to a reactor core state parameter determination method and an apparatus, a device, and a storage medium.

### BACKGROUND

With the widespread application of nuclear energy technology and the construction of nuclear power plants, the operational safety of nuclear reactors has become particularly important. By calculating reactor core state parameters, the operating status of a nuclear reactor can be quickly grasped. For example, a reactor core power distribution is one of the core parameters among the reactor core state parameters.

In the related art, the reactor core state parameters of a nuclear reactor are mainly monitored and statistically calculated through a reactor core correction physical model.

However, in the related art, the reactor core correction physical model cannot accurately calculate the reactor core state parameters of the nuclear reactor, which affects the determination of the operating status of the nuclear reactor.

### SUMMARY

Based on the above, for the above technical issues, it is necessary to provide a reactor core state parameter determination method and an apparatus, a device, and a storage medium, which can accurately determine the reactor core state parameters of a nuclear reactor and improve the accuracy of determining the operating status of the nuclear reactor.

In a first aspect, an embodiment of the present application provides a reactor core state parameter determination method. The method includes:
obtaining a measured reactor core power distribution of a target nuclear reactor;
adjusting a water gap width of each fuel assembly in a three-dimensional reactor core correction physical model of the target nuclear reactor according to the measured reactor core power distribution to obtain a reactor core correction physical model of the target nuclear reactor; wherein a deviation between a reactor core power distribution calculated by the reactor core correction physical model and the measured reactor core power distribution is less than a preset value; and
determining reactor core state parameters of the target nuclear reactor by means of the reactor core correction physical model.

In an embodiment, obtaining a measured reactor core power distribution of the target nuclear reactor includes:
obtaining measured reactor core power data of each nuclear reactor periodically collected by a nuclear power plant to which the target nuclear reactor belongs; and
determining the measured reactor core power distribution of the target nuclear reactor according to the measured reactor core power data of each nuclear reactor.

In an embodiment, adjusting the water gap width of each fuel assembly in the three-dimensional reactor core correction physical model of the target nuclear reactor according to the measured reactor core power distribution includes:
performing a water gap width adjustment step according to the measured reactor core power distribution, thereby adjusting the water gap width of each fuel assembly in the three-dimensional reactor core correction physical model;
wherein if a deviation between a reactor core power distribution calculated by adjusted three-dimensional reactor core correction physical model and the measured reactor core power distribution is greater than or equal to the preset value, re-performing the water gap width adjustment step until the deviation between a reactor core power distribution calculated by the adjusted three-dimensional reactor core correction physical model and the measured reactor core power distribution is less than the preset value, and stopping the adjustment.

In an embodiment, the water gap width adjustment step includes:
obtaining a latest reactor core power distribution calculated by the three-dimensional reactor core correction physical model;
determining a water gap width adjustment manner of each fuel assembly in the three-dimensional reactor core correction physical model according to the latest calculated reactor core power distribution and the measured reactor core power distribution; and
sequentially adjusting, according to a numbering order of fuel assemblies, a water gap width of each of the fuel assemblies according to the water gap width adjustment manner of the corresponding fuel assembly.

In an embodiment, determining the water gap width adjustment manner of each fuel assembly in the three-dimensional reactor core correction physical model according to the latest calculated reactor core power distribution and the measured reactor core power distribution includes:
for any fuel assembly in the three-dimensional reactor core correction physical model, obtaining a latest calculated assembly power of the fuel assembly in the latest calculated reactor core power distribution, and obtaining a measured assembly power of the fuel assembly in the measured reactor core power distribution; and
determining a water gap width adjustment manner of the fuel assembly according to the latest calculated assembly power and the measured assembly power.

In an embodiment, determining the water gap width adjustment manner of the fuel assembly according to the latest calculated assembly power and the measured assembly power includes:
if the latest calculated assembly power is greater than the measured assembly power, and a deviation ratio between the latest calculated assembly power and the measured assembly power is greater than or equal to a preset ratio, determining the water gap width adjustment manner to be overall reducing peripheral water gap widths of the fuel assembly by a preset magnitude; and
if the latest calculated assembly power is less than the measured assembly power, and a deviation ratio between the latest calculated assembly power and the measured assembly power is less than the preset ratio, determining the water gap width adjustment manner to be overall increasing peripheral water gap widths of the fuel assembly by a preset magnitude.

In an embodiment, sequentially adjusting the water gap width of each of the fuel assemblies according to the water gap width adjustment manner of the corresponding fuel assembly includes:
for any fuel assembly, if the water gap width adjustment manner for the fuel assembly is overall increasing the peripheral water gap widths by the preset magnitude, then increasing current water gap widths of the fuel assembly by a preset value to adjust the water gap width;
if the water gap width adjustment manner for the fuel assembly is overall reducing the peripheral water gap widths by the preset magnitude, then reducing current water gap widths of the fuel assembly by a preset value to adjust the water gap width.

In an embodiment, before adjusting the water gap width of each fuel assembly in the three-dimensional reactor core correction physical model of the target nuclear reactor according to the measured reactor core power distribution, the method further includes:
obtaining current unit rated parameters of the target nuclear reactor, a core loading scheme of the target nuclear reactor, and historical operating conditions of the target nuclear reactor; and
constructing the three-dimensional reactor core correction physical model of the target nuclear reactor according to the current unit rated parameters of the target nuclear reactor, the core loading scheme of the target nuclear reactor, and the historical operating conditions of the target nuclear reactor.

In a second aspect, an embodiment of the present application further provides a reactor core state parameter determination apparatus, where the apparatus includes:
an acquisition module, configured to obtain a measured reactor core power distribution of a target nuclear reactor;
a physical model determination module, configured to adjust a water gap width of each fuel assembly in a three-dimensional reactor core correction physical model of the target nuclear reactor according to the measured reactor core power distribution to obtain a reactor core correction physical model of the target nuclear reactor; wherein a deviation between a reactor core power distribution calculated by the reactor core correction physical model and the measured reactor core power distribution is less than a preset value; and
a power state parameter determination module, configured to calculate reactor core state parameters of the target nuclear reactor by means of the reactor core correction physical model.

In a third aspect, an embodiment of the present application provides a computer device, including a memory and a processor, the memory having a computer program stored therein, wherein when the processor executes the computer program, steps of the method provided in any embodiment of the first aspect are implemented.

In a fourth aspect, an embodiment of the present application provides a computer-readable storage medium, having a computer program stored therein, wherein when a processor executes the computer program, steps of the method provided in any embodiment of the first aspect are implemented.

In a fifth aspect, an embodiment of the present application further provides a computer program product, including a computer program, and when a processor executes the computer program, steps of the method provided in any embodiment of the first aspect are implemented.

### BRIEF DESCRIPTION OF THE DRAWINGS

In order to illustrate the technical solutions in the embodiments of the present application or in the related art more clearly, the drawings used in the description of the embodiments or the related art will be described briefly. Apparently, the following described drawings are merely for the embodiments of the present application, and other drawings can be derived based on these drawings by those of ordinary skill in the art without any creative effort.
FIG. 1 is an application environment view of a reactor core state parameter determination method in an embodiment.
FIG. 2 is a schematic flowchart of a reactor core state parameter determination method in an embodiment.
FIG. 3 is a schematic view showing a water gap of a rectangular fuel assembly in an embodiment.
FIG. 4 is a schematic flowchart of a reactor core state parameter determination method in another embodiment.
FIG. 5 is a schematic flowchart of a reactor core state parameter determination method in still another embodiment.
FIG. 6 is a schematic flowchart of a reactor core state parameter determination method in still another embodiment.
FIG. 7 is a schematic view of an exemplary core arrangement in an embodiment.
FIG. 8 is a schematic flowchart of a reactor core state parameter determination method in still another embodiment.
FIG. 9 is a schematic flowchart of a reactor core state parameter determination method in still another embodiment.
FIG. 10 is a schematic flowchart of a reactor core state parameter determination method in still another embodiment.
FIG. 11 is a schematic flowchart of a reactor core state parameter determination method in still another embodiment.
FIG. 12 is a structural block view of a reactor core state parameter determination apparatus in an embodiment.

### DETAILED DESCRIPTION

The present application is further described in detail with reference to the accompanying drawings and embodiments in order to make the objects, technical solutions, and advantages of the present application more clear. It should be understood that the specific embodiments described herein are only for explaining the present application, and not intended to limit the present application.

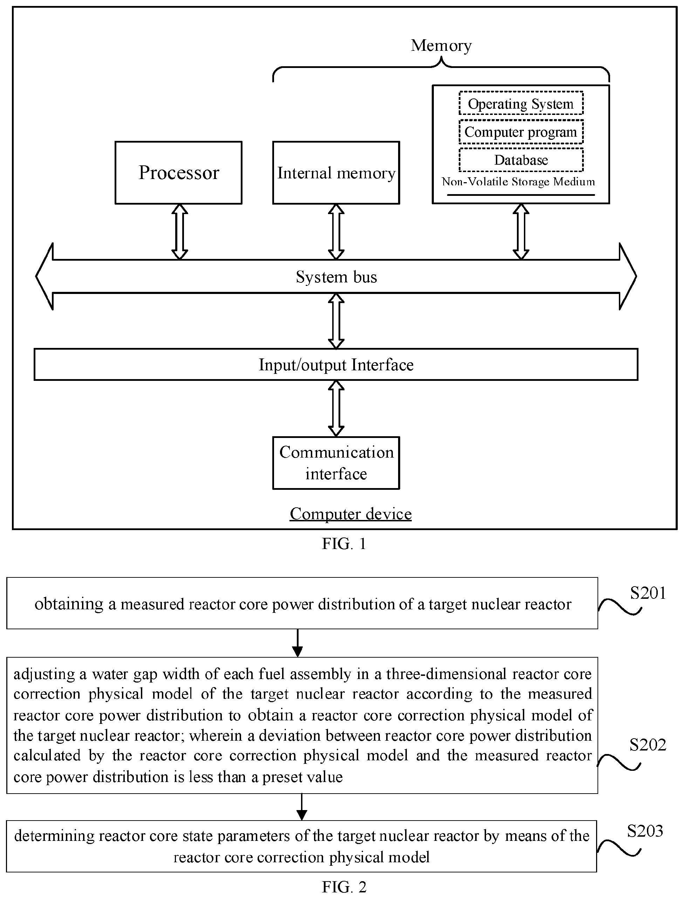

In an embodiment, a reactor core state parameter determination method is provided, which is described by taking the method as applied to the computer device in FIG. 1 as an example. The computer device includes a processor, a memory, a communication interface, a display screen, and an input device that are connected through a system bus. The processor of the computer device is configured to provide computing and control capabilities. The memory of the computer device includes a non-volatile storage medium and an internal memory. The non-volatile storage medium stores an operating system and a computer program. The internal memory provides an environment for the operating system and the computer program in the non-volatile storage medium to run. The communication interface of the computer device is configured to communicate with an external terminal by wired or wireless means, where the wireless means can be implemented through WIFI, a mobile cellular network, near field communication (NFC), or other technologies. The computer program, when executed by the processor, implements a reactor core state parameter determination method.

The computer device can be but is not limited to a personal computer, a laptop computer, a smart phone, a tablet computer, a server, an Internet of Things device, or a portable wearable device. The server can be implemented by an independent server or a server cluster composed of multiple servers. A data storage system can be deployed on the server, and the data storage system can store data to be processed by the server. The data storage system can be integrated on the server, or can be placed on the cloud or other network servers. The Internet of Things device can be a smart television, a smart vehicle-mounted device, or the like. The portable wearable device can be a smart watch, a smart bracelet, a head-mounted device, or the like.

In the related art, during the reactor core design process of a nuclear reactor, due to approximations in theoretical calculations and many uncertain factors in actual operation, there exists a certain deviation between the theoretical calculation results of the reactor core state parameters by a reactor core correction physical model and the measured results. Therefore, it is not possible to fully and accurately grasp and determine the current and future operating status of the reactor core based on the existing reactor core model. Based on this, an embodiment of the present application provides a reactor core state parameter determination method, which can accurately calculate the reactor core state parameters of a nuclear reactor, thereby accurately determining the operating status of the nuclear reactor.

A reactor core state parameter determination method provided by an embodiment of the present application is described below, taking a computer device as the execution subject. As shown in FIG. 2, in an embodiment, the reactor core state parameter determination method provided by an embodiment of the present application includes the following steps:

S201, obtaining a measured reactor core power distribution of a target nuclear reactor.

A nuclear reactor, also referred to as an atomic energy reactor or simply a reactor, is a device capable of maintaining a controlled self-sustaining chain nuclear fission reaction to achieve utilization of nuclear energy. A nuclear reactor achieves a self-sustaining chain nuclear fission process therein through rational arrangement of nuclear fuel, without the need for an external neutron source. Nuclear reactors include pressurized water reactors, boiling water reactors, heavy water reactors, fast reactors, etc.

The target nuclear reactor can be any pressurized water reactor requiring analysis of a reactor core power distribution of a fuel assembly. It should be noted that the target nuclear reactor in the embodiments of the present application includes at least one nuclear reactor or multiple nuclear reactors.

Reactor core power distribution refers to the power distribution at different positions inside a nuclear reactor, including the power distribution of various assemblies, e.g., fuel assemblies. Measured reactor core power distribution refers to the power distribution at different positions inside a nuclear reactor acquired through actual measurement and monitoring means, for example, it can be measured power distribution data acquired through periodic testing.

A reactor core power distribution is one of the core parameters among the reactor core state parameters of a nuclear reactor. Therefore, in the embodiments of the present application, the reactor core power distribution is used as a reference to train the reactor core correction physical model for the nuclear reactor.

In an embodiment, the computer device can obtain the measured reactor core power distribution of the target nuclear reactor by either reading it directly from a database, or by automatically generating the measured reactor core power distribution data based on historical experience data.

In another embodiment, obtaining the measured reactor core power distribution of the target nuclear reactor can be realized by acquiring the measured reactor core power distribution of the nuclear reactor through different types of detectors and sensors. The detectors can be neutron monitoring detectors, nuclear reaction rate detectors, etc. The sensors can be acoustic wave sensors, pressure sensors, etc. Detectors are arranged at different positions inside and outside the nuclear reactor to cover different regions of the reactor core. These detectors are of suitable types selected according to requirements. Data acquired from the detectors and sensors are processed and analyzed to obtain the measured reactor core power distribution of the target nuclear reactor.

S202, adjusting a water gap width of each fuel assembly in a three-dimensional reactor core correction physical model of the target nuclear reactor according to the measured reactor core power distribution to obtain a reactor core correction physical model of the target nuclear reactor, wherein a deviation between a reactor core power distribution calculated by the reactor core correction physical model and the measured reactor core power distribution is less than a preset value.

The three-dimensional reactor core correction physical model is a mathematical model configured to describe and analyze the three-dimensional structure and physical processes inside a nuclear reactor. In practical applications, the three-dimensional reactor core correction physical model can simulate the structure and pattern of nuclear fuel assemblies in a proportional manner according to actual conditions. For example, the geometric shape and position of fuel assemblies, the arrangement pattern of fuel assemblies, and gaps between fuel assemblies can be simulated through the three-dimensional reactor core correction physical model. No limitation is imposed thereon.

The reactor core correction physical model is a physical model capable of performing high-precision inversion of a reactor core power distribution by fusing measured signals. The reactor core physical model that is consistent with the measured state can be obtained by performing high-precision inversion of the reactor core power distribution using a cyclic step adjustment method based on the key influence parameter of the reactor core correction physical model (i.e., a water gap of the assembly) and according to measured power distribution data obtained from periodic testing.

The inversion of the reactor core correction physical model is performed on the basis of the three-dimensional reactor core correction physical model. By comparing with measured data, the water gap widths of fuel assemblies are adjusted to be consistent with the measured data. This can improve the accuracy and reliability of the reactor core physical model, making it better suited for prediction and analysis of a reactor core power distribution and other state parameters.

A fuel assembly refers to an entire group of fuel elements assembled together, including a number of fuel elements, a top nozzle, a bottom nozzle, a control rod, a guide thimble, spacer grids, and other components.

It can be understood that the number, arrangement, and structural form of the fuel elements in a fuel assembly vary with the reactor type. Different reactors use different fuel elements. The fuel elements can be classified by shapes as a rod-shaped fuel element, a tube-shaped fuel element, a plate-shaped fuel element, a spherical fuel element, a hexagonal fuel element, a square fuel element, etc. The fuel elements can be classified by nuclear fuel states as a metallic type, a ceramic type, a dispersion type, etc.

Fuel assemblies are typically arranged in a certain pattern. The arrangement pattern of fuel assemblies also varies among different reactors. These arrangement patterns can be a single arrangement, or a complex multi-row and multi-column arrangement, or even a complex arrangement involving three-dimensional space.

Since adjusting the water gap width of the fuel assembly changes the moderation conditions and assembly cross-sections of the respective assemblies, thereby changing the power level, the method of adjusting the water gap widths of fuel assemblies is adopted to obtain the reactor core correction physical model of the target nuclear reactor.

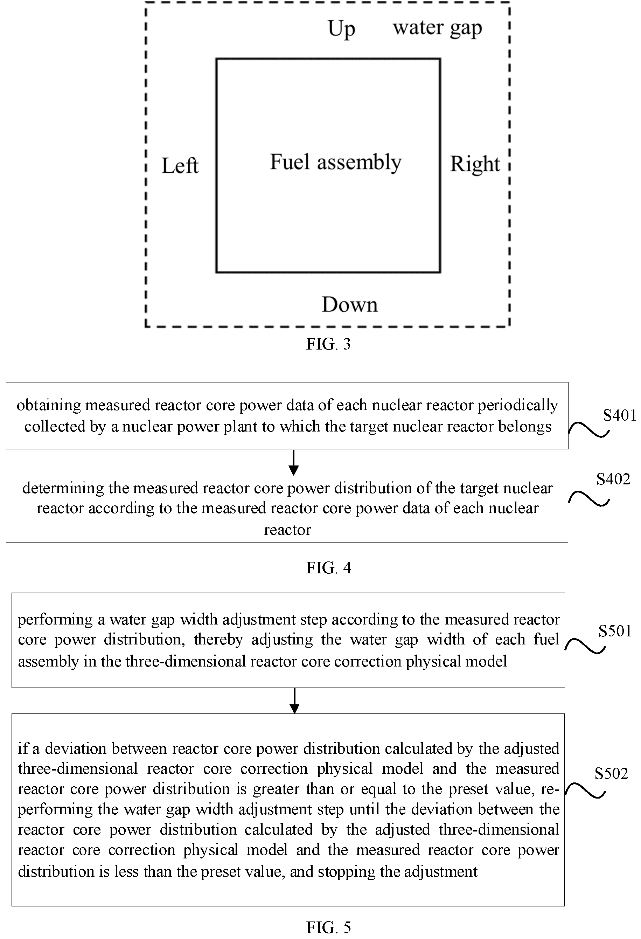

Taking a rectangular fuel assembly as an example, a schematic view of the water gap of a rectangular fuel assembly is shown in FIG. 3. Since a certain gap is left between assemblies during arrangement, and the gap space is filled with water in a pressurized water reactor, the gap space is defined as the water gap of the assembly.

In an embodiment, obtaining the reactor core correction physical model of the target nuclear reactor can be performed by incorporating the water gap width as an adjustable parameter into the physical model, performing simulation calculations using a nuclear reactor simulation software, and adjusting the water gap width of each fuel assembly to obtain the reactor core correction physical model of the target nuclear reactor.

In another embodiment, by analyzing historical operating data of the nuclear reactor, including sensor measurement data, control parameter settings, etc., and analyzing the historical operating data by big data analysis technology, correlations and patterns in the data can be obtained using methods such as data mining and machine learning. Based on the results of the data analysis, a water gap width adjustment model is established. The water gap width of each fuel assembly is adjusted using the water gap width adjustment model to obtain the reactor core correction physical model of the target nuclear reactor.

The deviation is a deviation between the calculated value of the reactor core correction physical model and the measured value. During the reactor core nuclear design process, due to approximations in theoretical calculations and many uncertain factors in actual operation, a certain deviation exists between the theoretical calculation results for a power distribution by the reactor core correction physical model and the measured results. The preset value is a reference value set according to specific circumstances and requirements, and is used to determine whether the deviation between the reactor core power distribution calculated by the reactor core correction physical model and the measured reactor core power distribution is within an acceptable range. The preset value can be set to 0.1%, which is not limited.

S203, calculating reactor core state parameters of the target nuclear reactor by means of the reactor core correction physical model.

The reactor core correction physical model has been obtained above, and based on the obtained reactor core correction physical model, the reactor core state parameters of the target nuclear reactor are determined. The reactor core state parameters can be but are not limited to the subsequent reactor core power distribution of the target nuclear reactor and variation trends of numerous other state parameters.

Optionally, determining the reactor core state parameters can be performed by inputting collected measured data or historical operating data into the reactor core correction physical model, dividing some collected measured data or historical operating data into a training set and a test set, training the initial reactor core correction physical model with the training set to obtain a trained reactor core state parameter prediction model, and then evaluating the performance of the reactor core state parameter prediction model with the test set. If the performance meets the requirement, it is determined that the reactor core state parameter prediction model has been successfully trained, so as to obtain the reactor core state parameters according to the embodiments of the present application.

Optionally, determining the reactor core state parameters can be performed by determining the reactor core state parameters through a preset reactor core state parameter prediction algorithm in the reactor core correction physical model. Specifically, collected measured data or historical operating data is used as input to the reactor core state parameter prediction algorithm, and the reactor core state parameter prediction algorithm is run to obtain the reactor core state parameters of the target nuclear reactor.

In the reactor core state parameter determination method and the apparatus, the device, and the storage medium provided by embodiments of the present application, a measured reactor core power distribution of a target nuclear reactor is obtained, and the water gap width of each fuel assembly in the three-dimensional reactor core correction physical model of the target nuclear reactor is adjusted according to the measured reactor core power distribution to obtain the reactor core correction physical model of the target nuclear reactor, where the deviation between the reactor core power distribution calculated by the reactor core correction physical model and the measured reactor core power distribution is less than a preset value. The reactor core power distribution of the target nuclear reactor is calculated by means of the reactor core correction physical model. In this method, the water gap width of each fuel assembly in the three-dimensional reactor core correction physical model of the nuclear reactor is adjusted through the measured reactor core power distribution. During this adjustment process, the physical model can more closely approximate the actual situation, thereby obtaining a more precise reactor core correction physical model for the target nuclear reactor. Furthermore, the deviation between the power distribution calculated by the obtained reactor core correction physical model and the measured reactor core power distribution is maintained within a preset small range, ensuring the reliability and accuracy of the model, so that the reactor core state parameters determined by the reactor core correction physical model are more reliable. Therefore, the reactor core state parameters of the target nuclear reactor can be accurately obtained by the reactor core correction physical model of the target nuclear reactor.

Another reactor core state parameter determination method provided by an embodiment of the present application is described below. As shown in FIG. 4, in an embodiment, obtaining a measured reactor core power distribution of the target nuclear reactor can further include the following steps:

S401, obtaining measured reactor core power data of each nuclear reactor periodically collected by a nuclear power plant to which the target nuclear reactor belongs.

A nuclear power plant is typically composed of multiple units, each of which is an independent nuclear reactor installation, and they can have different operating parameters, configurations, and performance data.

The measured reactor core power data of a nuclear reactor may include but is not limited to temperature data at different positions, such as a fuel temperature, a coolant temperature, etc., pressure data at different positions of the nuclear reactor, or flow rate data of coolant or other fluids.

In an embodiment, obtaining the measured reactor core power data of each nuclear reactor periodically collected by the nuclear power plant to which the target nuclear reactor belongs may include acquiring sensor measurement values and operational records, integrating and analyzing them to obtain the measured reactor core power data of each nuclear reactor in the nuclear power plant to which the target nuclear reactor belongs.

In another embodiment, obtaining the measured reactor core power data of each nuclear reactor periodically collected by the nuclear power plant to which the target nuclear reactor belongs can be performed by determining the measured reactor core power data through a preset power distribution algorithm, wherein with data of each nuclear reactor in the nuclear power plant to which the target nuclear reactor belongs as input, the algorithm is run to obtain the measured reactor core power data of each nuclear reactor in the nuclear power plant to which the target nuclear reactor belongs.

For example, the obtained power distribution of reactor core assemblies of the target nuclear reactor can be represented as:$\left(p_real\left(i\right), i = 1, 2, ... N\right)$ where, N represents the number of assemblies in the reactor core. For example, N is a positive integer and can take the value 157.

S402, determining the measured reactor core power distribution of the target nuclear reactor according to the measured reactor core power data of each nuclear reactor.

Based on the obtained measured reactor core power data of each nuclear reactor, the measured reactor core power distribution of the target nuclear reactor is determined.

In an embodiment, the reactor core power distribution data of the target nuclear reactor is found through mapping relationships between respective nuclear reactors and their measured reactor core power distribution data. Specifically, a reactor core power distribution data identifier corresponding to the target nuclear reactor is found in a mapping relationship table. Then, based on this identifier, the measured reactor core power distribution data of the target nuclear reactor is obtained from the database, thereby determining the measured reactor core power distribution of the target nuclear reactor.

In another embodiment, the measured data of each nuclear reactor is input to a preset reactor core power distribution algorithm, and the reactor core powers at different positions are calculated. Through the preset reactor core power distribution algorithm, the measured reactor core power data is analyzed and calculated, thereby determining the measured reactor core power distribution of the target nuclear reactor.

In the embodiment of the present application, the measured reactor core power data of each nuclear reactor periodically collected by the nuclear power plant to which the target nuclear reactor belongs is obtained, and the measured reactor core power distribution of the target nuclear reactor is determined according to the measured reactor core power data of each nuclear reactor. In this method, by obtaining the measured reactor core power data of each nuclear reactor periodically collected by the nuclear power plant, accurate records of the actual operating conditions of different nuclear reactors can be obtained. Since the measured data reflects the reactor core power distribution of nuclear reactors under different operating conditions, the measured data is analyzed and processed to determine the measured reactor core power distribution of the target nuclear reactor, thereby more realistically understanding the operating conditions of the nuclear reactor.

Another reactor core state parameter determination method provided by an embodiment of the present application is described below. As shown in FIG. 5, in an embodiment, adjusting the water gap width of each fuel assembly in the three-dimensional reactor core correction physical model of the target nuclear reactor according to the measured reactor core power distribution can further include the following steps:

S501, performing a water gap width adjustment step according to the measured reactor core power distribution, thereby adjusting the water gap width of each fuel assembly in the three-dimensional reactor core correction physical model.

In an embodiment, based on the measured reactor core power distribution data, the water gap width variation to be adjusted is calculated. Through a preset water gap width adjustment algorithm, the water gap width variation of each fuel assembly is calculated, the water gap width adjustment algorithm is run, the water gap width of each fuel assembly is automatically calculated and adjusted, and the variation is added to or subtracted from the initial water gap width to obtain the adjusted water gap width. The adjusted water gap width value is updated to the corresponding fuel assembly position in the three-dimensional reactor core correction physical model.

In another embodiment, based on the measured reactor core power distribution data, the water gap width variation to be adjusted is calculated. Based on preset adjustment rules, the water gap width is adjusted for each fuel assembly. After the adjustment is completed, the adjusted water gap width value is updated to the corresponding fuel assembly position in the three-dimensional reactor core correction physical model.

S502, if a deviation between a reactor core power distribution calculated by the adjusted three-dimensional reactor core correction physical model and the measured reactor core power distribution is greater than or equal to the preset value, re-performing the water gap width adjustment step until the deviation between the reactor core power distribution calculated by the adjusted three-dimensional reactor core correction physical model and the measured reactor core power distribution is less than the preset value, and stopping the adjustment.

Optionally, the deviation can be represented as a deviation between the calculated reactor core power distribution and the measured reactor core power distribution, or can be represented as a mean square error between the calculated reactor core power distribution and the measured reactor core power distribution, which is not limited herein.

The reactor core power distribution calculated by the adjusted three-dimensional reactor core correction physical model is compared with the measured reactor core power distribution. If it is found that the deviation between the calculated reactor core power distribution and the measured reactor core power distribution is greater than or equal to the preset value, then the water gap width between fuel assemblies is adjusted to make the calculated reactor core power distribution closer to the measured data. If, after re-performing the water gap width adjustment step, the adjusted three-dimensional reactor core correction physical model still fails to meet the preset deviation requirement, the water gap width adjustment step is performed again. This process will continue to loop until the loop ending condition is met, that is, until the deviation between the reactor core power distribution calculated by the adjusted three-dimensional reactor core correction physical model and the measured reactor core power distribution is less than the preset value.

The calculated reactor core power distribution can be represented as (p _ ref (*i*), *i* = 1, 2, ..., 157). The measured reactor core power distribution can be represented as (p _ real (*i*), *i* = 1, 2 , ..., 157). As shown in Equation (1), Equation (1) represents the loop ending condition, that is, the mean square error between the calculated reactor core power distribution and the measured reactor core power distribution is less than the preset value.$\sqrt{\frac{1}{N} {\sum }_{i = 1}^{N} {\left(p_ref\left(i\right)-p_real\left(i\right)\right)}^{2}} \leq ε$ (1)

In the equation, N represents the number of assemblies in the reactor core, *i* represents the assembly number, p_ref (*i*) represents the calculated power level of the *i*th assembly, p_real (*i*) represents the measured power level of the *i*-th assembly; and ε represents the preset value, which can be set to 0.1%, without limitation thereon.

If the deviation between the calculated reactor core power distribution and the measured reactor core power distribution is less than the preset value, the loop is exited.

In the embodiment of the present application, the water gap width adjustment step is performed according to the measured reactor core power distribution, thereby adjusting the water gap width of each fuel assembly in the three-dimensional reactor core correction physical model. If the deviation between the reactor core power distribution calculated by the adjusted three-dimensional reactor core correction physical model and the measured reactor core power distribution is greater than or equal to the preset value, the water gap width adjustment step is re-performed until the deviation between the reactor core power distribution calculated by the adjusted three-dimensional reactor core correction physical model and the measured reactor core power distribution is less than the preset value, and the adjustment is stopped. In this method, based on the current measured reactor core power distribution, the assembly water gap parameters in the physical model are cyclically adjusted multiple times using the cyclic step adjustment method, thereby correcting the assembly cross-section and changing its power level. Finally, the calculated power distribution level is corrected through water gap adjustment to be consistent with the measured power distribution level, that is, a physical model with the actual power state inverted is realized. Adjusting the water gap width through the measured reactor core power distribution can progressively optimize the physical model to make it more accurately reflect the actual reactor core conditions, thereby improving the prediction accuracy of the reactor core power distribution. Through continuous iterative water gap width adjustment, the physical model can gradually approximate the actual situation, reducing the deviation between the model calculations and actual conditions. Additionally, this method does not require manual intervention, can avoid errors introduced by manual involvement, and can also improve the accuracy of the reactor core power distribution.

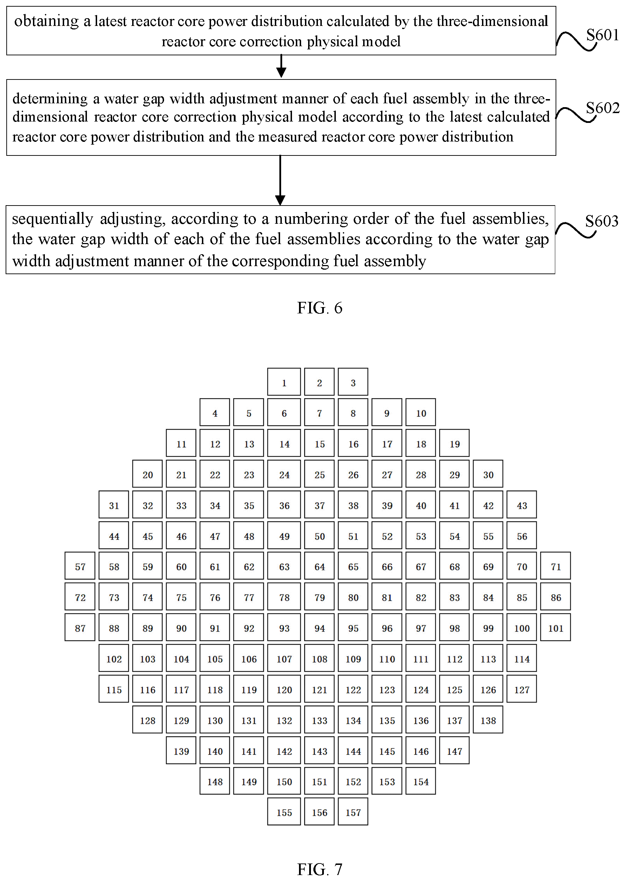

Another reactor core state parameter determination method provided by an embodiment of the present application is described below. As shown in FIG. 6, in an embodiment, the water gap width adjustment step includes the following steps:
S601, obtaining a latest reactor core power distribution calculated by the three-dimensional reactor core correction physical model.

In practical applications, in order to obtain the latest reactor core power distribution calculated by the three-dimensional reactor core correction physical model, nuclear reactor design simulation software can be used. Nuclear reactor design simulation software is specifically configured to design, analyze, and simulate nuclear reactors, and includes a series of specific programs, for example, a three-dimensional reactor core physics design program.

In an embodiment, the latest reactor core power distribution calculated by the three-dimensional reactor core correction physical model is obtained by constructing the three-dimensional reactor core correction physical model by using nuclear reactor simulation software, and performing simulation calculations during the simulation process. Based on set design parameters, physical characteristics, and operating conditions, the latest reactor core power distribution calculated by the three-dimensional reactor core correction physical model is obtained.

In another embodiment, the latest reactor core power distribution calculated by the three-dimensional reactor core correction physical model is obtained by performing historical data analysis and applying a preset prediction model. During the operation of a nuclear reactor, a large amount of historical data is accumulated. A prediction model, which can be a machine learning model, a neural network model, etc., is established through the historical data. With the historical data as input, the prediction model is run to obtain the latest reactor core power distribution calculated by the three-dimensional reactor core correction physical model.

S602, determining a water gap width adjustment manner of each fuel assembly in the three-dimensional reactor core correction physical model according to the latest calculated reactor core power distribution and the measured reactor core power distribution.

In an embodiment, the water gap width adjustment positions are determined according to the deviation between the latest calculated reactor core power distribution and the measured reactor core power distribution. Each position required to be adjusted is defined as a design variable, which represents a water gap width adjustment value for the fuel assembly surrounding the position. At the same time, some constraint conditions, such as upper and lower limits on the adjustment value, can be set to ensure that the adjustments are reasonable.

In another embodiment, based on the deviation between the latest calculated reactor core power distribution and the measured reactor core power distribution, the positions where the water gap widths need to be adjusted are analyzed. A threshold is set, and if the deviation exceeds the threshold, the position is marked as a position where the water gap width needs to be adjusted.

S603, sequentially adjusting, according to a numbering order of the fuel assemblies, the water gap width of each of the fuel assemblies according to the water gap width adjustment manner of the corresponding fuel assembly.

Considering that a large number of fuel assemblies exist in a nuclear reactor, in order to avoid duplication or confusion, a numbering method is adopted. The numbering can be from small to large or from large to small, or can be in different directions such as left to right, right to left, top to bottom, or bottom to top. These numbering methods can be combined arbitrarily, which is not limited herein.

When performing the water gap width adjustment of fuel assemblies, the adjustments can be made sequentially according to the numbering order of the fuel assemblies. This orderly approach can effectively manage each fuel assembly in the nuclear reactor, thereby maintaining the correct position and state thereof while reducing the possibility of operational errors and confusion.

As shown in FIG. 7, a schematic view of a nuclear reactor is provided. The core of the nuclear reactor is loaded with 157 sets of fuel assemblies, numbered from the upper left corner to the lower right corner of the core, with numbers from 1 to 157, or any total number of fuel assemblies. First, initial water gap widths of all assemblies are all set to 2 mm, which is not limited herein. Starting from number 1, the water gap widths of the fuel assemblies are adjusted one by one. The first pass of adjustments with a fixed step size is completed in sequence according to the fuel assembly numbers. Following the numbering order, for each fuel assembly, the calculated water gap width adjustment value is applied to its initial water gap width to obtain the adjusted water gap width. The water gap width of each fuel assembly is sequentially adjusted according to the numbering order until the water gap widths of all fuel assemblies have been adjusted.

In the embodiment of the present application, the latest reactor core power distribution calculated by the three-dimensional reactor core correction physical model is obtained, the water gap width adjustment manner of each fuel assembly in the three-dimensional reactor core correction physical model is determined according to the latest calculated reactor core power distribution and the measured reactor core power distribution, and according to the numbering order of the fuel assemblies, the water gap width of a corresponding fuel assembly is sequentially adjusted according to the water gap width adjustment manner of each fuel assembly. In this method, by analyzing the deviation between the latest calculated reactor core power distribution and the measured reactor core power distribution, the specific water gap width adjustment manner of each fuel assembly can be inferred, thereby making the calculated reactor core power distribution derived from the three-dimensional reactor core correction physical model closer to the measured reactor core power distribution. Moreover, the sequential one-by-one adjustment of the water gaps can effectively eliminate mutual interference with the power levels of other assemblies to a certain extent.

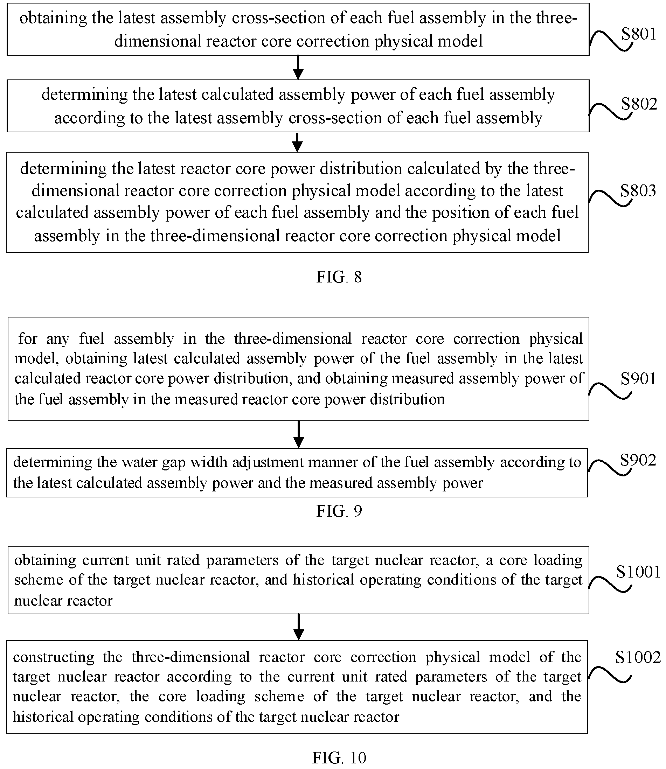

Another reactor core state parameter determination method provided by an embodiment of the present application is described below. As shown in FIG. 8, in an embodiment, obtaining the latest reactor core power distribution calculated by the three-dimensional reactor core correction physical model includes the following steps:

S801, obtaining the latest assembly cross-section of each fuel assembly in the three-dimensional reactor core correction physical model.

The assembly cross-section represents the probability of various interactions during nuclear reactions. In the fields of nuclear physics and nuclear engineering, cross-section refers to the probability or likelihood of a certain type of nuclear reaction, such as absorption, scattering, fission, etc., occurring under specific conditions. Assembly cross-sections can be classified into different types, which can be but is not limited to absorption cross-section, scattering cross-section, fission cross-section, etc. The assembly cross-section is related to the material (such as nuclide concentration), geometric structure, external environment (such as temperature, pressure, water gap, control rod position), or other state conditions of the assembly. If the above state conditions change, the assembly cross-section changes.

The state of the assembly is related to core conditions. For example, if the burnup, temperature, pressure, arrangement (primarily affecting water gap), etc. of the reactor core change, the assembly cross-section will change or be updated.

In an embodiment, obtaining the latest assembly cross-section of each fuel assembly in the three-dimensional reactor core correction physical model can be performed by calculating the current nuclide density distribution and the external water gap condition of the assembly, solving the neutron transport equation under the corresponding temperature and pressure to obtain a probability of various nuclear reactions occurring for the assembly under current conditions, i.e., the assembly cross-section.

In another embodiment, obtaining the latest assembly cross-section of each fuel assembly in the three-dimensional reactor core correction physical model can be performed by analyzing the nuclear physics data of each fuel assembly, and in combination with the actual reactor core model, calculating the latest assembly cross-section of each fuel assembly in the actual reactor core model.

S802, determining the latest calculated assembly power of each fuel assembly according to the latest assembly cross-section of each fuel assembly.

An assembly power is the energy released from nuclear reactions per unit time.

In an embodiment, determining the latest calculated assembly power of each fuel assembly according to the latest assembly cross-section of each fuel assembly can be performed through an empirical formula. Based on a selected empirical formula, the latest cross-section of the fuel assembly is substituted into the formula to derive the latest calculated assembly power of each fuel assembly.

In another embodiment, determining the latest calculated assembly power of each fuel assembly according to the latest assembly cross-section of each fuel assembly can be performed through a preset assembly power algorithm. The latest assembly cross-section of each fuel assembly is used as input to a preset assembly power algorithm, and the preset assembly power algorithm is run to determine the latest calculated assembly power of each fuel assembly.

S803, determining the latest reactor core power distribution calculated by the three-dimensional reactor core correction physical model according to the latest calculated assembly power of each fuel assembly and the position of each fuel assembly in the three-dimensional reactor core correction physical model.

In an embodiment, by combining, for each fuel assembly, its latest calculated assembly power with its position in the three-dimensional reactor core correction physical model, a spatial distribution map containing power values of all fuel assemblies can be generated. In the spatial distribution map, the position of each fuel assembly corresponds to a specific power value. By combining the positions and power values of all fuel assemblies, the latest reactor core power distribution calculated by the three-dimensional reactor core correction physical model can be determined.

In the embodiment of the present application, the latest assembly cross-section of each fuel assembly in the three-dimensional reactor core correction physical model is obtained, the latest calculated assembly power of each fuel assembly is determined by solving the neutron diffusion theory formula according to the latest assembly cross-section of each fuel assembly, and the latest reactor core power distribution calculated by the three-dimensional reactor core correction physical model is determined according to the latest calculated assembly power of each fuel assembly and the position of each fuel assembly in the three-dimensional reactor core correction physical model. In this method, through the latest assembly cross-section data of each fuel assembly, the calculated power of each fuel assembly can be more precisely calculated. Furthermore, by combining the latest calculated assembly power of each fuel assembly with the position of each fuel assembly in the three-dimensional reactor core correction physical model, the latest reactor core power distribution calculated by the three-dimensional reactor core correction physical model can be accurately determined.

Another reactor core state parameter determination method provided by an embodiment of the present application is described below. As shown in FIG. 9, in an embodiment, the determining the water gap width adjustment manner of each fuel assembly in the three-dimensional reactor core correction physical model according to the latest calculated reactor core power distribution and the measured reactor core power distribution includes the following steps:

S901, for any fuel assembly in the three-dimensional reactor core correction physical model, obtaining a latest calculated assembly power of the fuel assembly in the latest calculated reactor core power distribution, and obtaining a measured assembly power of the fuel assembly in the measured reactor core power distribution.

Optionally, the latest calculated assembly power of the fuel assembly in the latest calculated reactor core power distribution can be obtained from the correspondence between fuel assembly positions and the latest calculated reactor core power distribution. For example, based on the latest calculated reactor core power distribution, the corresponding fuel assembly position is determined, and the latest calculated assembly power of the fuel assembly at the position is obtained.

Optionally, the measured assembly power of the fuel assembly in the measured reactor core power distribution can be obtained from the correspondence between the measured reactor core power distribution and fuel assembly positions in the three-dimensional reactor core model. For example, based on the measured reactor core power distribution, the corresponding fuel assembly position is determined, and the measured assembly power of the fuel assembly at the position is obtained.

S902, determining the water gap width adjustment manner of the fuel assembly according to the latest calculated assembly power and the measured assembly power.

Adjusting the water gap width changes the moderation conditions and assembly cross-sections of respective assemblies, thereby changing the power level.

The moderation conditions refer to a series of measures taken in a nuclear reactor to slow down neutrons, so that they can better collide with fissile material, thereby accelerating the nuclear reaction rate. Substances commonly used as moderators in nuclear reactors are such as water, heavy water, graphite, etc. These substances have a high neutron scattering cross-section and can effectively slow down neutrons.

In an embodiment, the latest calculated assembly power and the measured assembly power are compared. If the latest calculated assembly power is greater than the measured assembly power, the calculated assembly power needs to be reduced, and accordingly the water gap is reduced. Comparing the latest calculated assembly power and the measured assembly power, if the latest calculated assembly power is less than the measured assembly power, the calculated assembly power needs to be increased, and accordingly the water gap is increased.

In the embodiment of the present application, for any fuel assembly in the three-dimensional reactor core correction physical model, the latest calculated assembly power of the fuel assembly in the latest calculated reactor core power distribution is obtained, and the measured assembly power of the fuel assembly in the measured reactor core power distribution is obtained, and the water gap width adjustment manner of the fuel assembly is determined according to the latest calculated assembly power and the measured assembly power. In this method, by comparing the latest calculated assembly power with the measured assembly power, the water gap width of the fuel assembly is appropriately adjusted according to the comparison result, so as to better reflect the actual situation. When there is a deviation between the latest calculated assembly power and the measured assembly power, it indicates that the physical model may have a deviation from the actual situation. Through comparative analysis, the power status of each fuel assembly can be accurately understood, and then whether the water gap width of the fuel assembly needs to be adjusted is determined.

Another reactor core state parameter determination method provided by an embodiment of the present application is described below. In an embodiment, the determining the water gap width adjustment manner of the fuel assembly according to the latest calculated assembly power and the measured assembly power includes the follows.

As shown in Equation (2), according to the latest calculated assembly power and the measured assembly power, if the latest calculated assembly power is greater than or equal to the measured assembly power, and a deviation ratio between the latest calculated assembly power and the measured assembly power is greater than a threshold value, the peripheral water gap width of the assembly is overall reduced by a fixed magnitude (Δ*µ* = 0*.*01*mm*) .$\frac{p_ref \left(i\right) - p_real \left(i\right)}{p_real \left(i\right)} * 100 % > δ$ (2)

In the equation, p_ref (*i*) represents the calculated power level of the *i-*th assembly, p_real (*i*) represents the measured power level of the i-th assembly, and *δ* represents the threshold value for water gap width adjustment, which can be set to 0.1%, without limitation thereon.

If the latest calculated assembly power is greater than the measured assembly power, the water gap width between fuel assemblies is reduced so as to decrease the intensity of the nuclear reaction.

Of course, there is the case where the latest calculated assembly power is less than the measured assembly power. As shown in Equation (3), according to the latest calculated assembly power and the measured assembly power, if the latest calculated assembly power is less than the measured assembly power, and the deviation ratio between the latest calculated assembly power and the measured assembly power is greater than the threshold value, the peripheral water gap width of the assembly is overall increased by a fixed magnitude (Δ,*µ = 0.01mm)*$\frac{p_ref \left(i\right) - p_real \left(i\right)}{p_real \left(i\right)} * 100 % < δ$ (3)

In the equation, p_ref (*i*) represents the calculated power level of the *i-*th assembly, p_real (*i*) represents the measured power level of the i-th assembly, and *δ* represents the threshold value for water gap width adjustment, which can be set to 0.1%, without limitation thereon.

If the latest calculated assembly power is less than the measured assembly power, the water gap width between fuel assemblies is increased so as to increase the intensity of the nuclear reaction.

After sequentially completing the first step adjustment of all assemblies, based on the reactor core physical model after the first assembly water gap correction, a diffusion calculation is performed in the core nodal program SMART, so as to obtain a new full-core calculated power distribution level.

Based on the new calculated power distribution level and the measured power distribution level, the next fixed-step adjustment is performed until the loop condition is met. Finally, a reactor core correction physical model with a specific water gap distribution is obtained, which has a theoretical power level completely corresponding to the measured reactor core power level.

In the embodiment of the present application, if the latest calculated assembly power is greater than the measured assembly power, and the deviation ratio between the latest calculated assembly power and the measured assembly power is less than the preset ratio, the water gap width adjustment manner is determined to be overall reducing the peripheral water gap widths of the fuel assembly by the preset magnitude. If the latest calculated assembly power is less than the measured assembly power, and the deviation ratio between the latest calculated assembly power and the measured assembly power is greater than or equal to the preset ratio, the water gap width adjustment manner is determined to be overall increasing the peripheral water gap widths of the fuel assembly by the preset magnitude. In this method, by dynamically adjusting the water gap widths of fuel assemblies, the latest calculated assembly power is adjusted to be closer to the measured assembly power. By comparing the latest calculated assembly power with the measured assembly power, the accuracy of the three-dimensional reactor core correction physical model can be verified. When the deviation ratio between the latest calculated assembly power and the measured assembly power exceeds the preset ratio, it indicates that the three-dimensional reactor core correction physical model has errors or inaccuracies. Therefore, the three-dimensional reactor core correction physical model needs to be further adjusted to enhance its accuracy. Moreover, the water gap width adjustment is an automated adjustment, reducing manual intervention and thereby improving efficiency of adjustment.

Another reactor core state parameter determination method provided by an embodiment of the present application is described below. In an embodiment, sequentially adjusting the water gap width of each of the fuel assemblies according to the water gap width adjustment manner of the corresponding fuel assembly includes:
for any fuel assembly, if the water gap width adjustment manner of the fuel assembly is overall increasing the peripheral water gap widths by a preset magnitude, increasing the current water gap width of the fuel assembly by a preset value, thereby adjusting the water gap width; if the water gap width adjustment manner of the fuel assembly is overall reducing the peripheral water gap widths by the preset magnitude, reducing the current water gap width of the fuel assembly by a preset value, thereby adjusting the water gap width.

In an embodiment, the current water gap widths around the target fuel assembly are correspondingly increased or decreased according to the preset value. The preset value can be a pre-set parameter for controlling the degree of water gap width adjustment.

In the embodiment of the present application, for any fuel assembly, if the water gap width adjustment manner of the fuel assembly is overall increasing the peripheral water gap widths by the preset magnitude, the water gap width adjustment is performed by increasing the current water gap width of the fuel assembly by a preset value. If the water gap width adjustment manner of the fuel assembly is overall reducing the peripheral water gap widths by the preset magnitude, the water gap width adjustment is performed by reducing the current water gap width of the fuel assembly by a preset value. In this method, a suitable adjustment manner is selected according to specific conditions, and fine adjustment of the water gap widths of fuel assemblies is achieved by means of increasing or reducing the preset magnitude, realizing precise adjustment of water gap widths.

Another reactor core state parameter determination method provided by an embodiment of the present application is described below. As shown in FIG. 10, in an embodiment, before the adjusting the water gap width of each fuel assembly in the three-dimensional reactor core correction physical model of the target nuclear reactor according to the measured reactor core power distribution, the method further includes the following steps:

S1001, obtaining current unit rated parameters of the target nuclear reactor, a core loading scheme of the target nuclear reactor, and historical operating conditions of the target nuclear reactor.

The current unit rated parameters of the target nuclear reactor include design parameters, fuel characteristics, cooling system, etc., of the nuclear reactor. The core loading scheme refers to the layout and arrangement pattern of fuel assemblies. The historical operating conditions of the target nuclear reactor include operating conditions of the nuclear reactor at different time periods, such as power changes, temperature changes, etc.

In an embodiment, the current unit rated parameters of the target nuclear reactor, the core loading scheme of the target nuclear reactor, and the historical operating conditions of the target nuclear reactor can be obtained by directly reading them from a database, or by automatically generating data of rated parameters, loading scheme, and historical operating conditions based on historical empirical data.

In another embodiment, by visiting the site of the nuclear reactor, obtaining permission and following safety regulations, on-site measurements are performed to obtain actual measurement data of the nuclear reactor, and the actual measurement data of the nuclear reactor is analyzed and calculated to obtain data of the rated parameters, core loading scheme, and historical operating conditions of the nuclear reactor.

S1002, constructing the three-dimensional reactor core correction physical model of the target nuclear reactor according to the current unit rated parameters of the target nuclear reactor, the core loading scheme of the target nuclear reactor, and the historical operating conditions of the target nuclear reactor.

Optionally, constructing the three-dimensional reactor core correction physical model of the target nuclear reactor can be performed by modeling and analysis through computer simulation software, thereby constructing the three-dimensional reactor core correction physical model of the target nuclear reactor. In the simulation software, based on the rated parameters and core loading scheme, the cross-sections, reaction cross-sections, and other physical parameters of the fuel assemblies are set. At the same time, different historical operating conditions are set to simulate conditions such as different power changes and temperature changes. The simulation software is run to construct the three-dimensional reactor core correction physical model of the target nuclear reactor.

In the embodiment of the present application, the current unit rated parameters of the target nuclear reactor, the core loading scheme of the target nuclear reactor, and the historical operating conditions of the target nuclear reactor are obtained, and the three-dimensional reactor core correction physical model of the target nuclear reactor is constructed according to the current unit rated parameters of the target nuclear reactor, the core loading scheme of the target nuclear reactor, and the historical operating conditions of the target nuclear reactor. In this method, the three-dimensional reactor core correction physical model constructed through the current unit rated parameters, core loading scheme, and historical operating conditions of the target nuclear reactor can more accurately reflect the characteristics of the actual nuclear reactor, improving the accuracy of the three-dimensional reactor core correction physical model. Moreover, through analysis using the three-dimensional reactor core correction physical model of the target nuclear reactor, the need for actual experiments can be reduced, lowering cost and time investment while still obtaining a precise reactor core power distribution.

Another reactor core state parameter determination method provided by an embodiment of the present application is described below. In an embodiment, during the process of adjusting the water gap width of each fuel assembly in the three-dimensional reactor core correction physical model of the target nuclear reactor, the three-dimensional reactor core correction physical model satisfies at least one of the following conditions:
the water gap width of each fuel assembly is related only to the fuel assembly itself, and has no correlation with the actual spacing between adjacent fuel assemblies of the fuel assembly; the influence of the water gap width of each fuel assembly in each direction on the assembly cross-section and an assembly power of the fuel assembly itself is equivalent; the assembly power of each fuel assembly is weakly correlated with the assembly power of other fuel assemblies.

For each fuel assembly, the water gap width is adjusted independently without being affected by adjacent fuel assemblies. This means that the water gap width of each fuel assembly is related only to the characteristics of the fuel assembly itself, and is not affected by the actual spacing of adjacent assemblies. The assembly water gap width is used solely as a direct correction means for the cross-section of a single fuel assembly, so as to change the power level of each fuel assembly in the core one by one.

In an embodiment, a nuclear reactor has a row of arranged fuel assemblies, each fuel assembly having different materials and characteristics. Through this method, the water gap width of each fuel assembly can be individually adjusted according to the needs of each fuel assembly so as to achieve the desired power distribution. This independent adjustment method can more finely control the power distribution among different fuel assemblies without considering the influence of adjacent assemblies.

The influence of the water gap width of each fuel assembly in each direction on the assembly cross-section and an assembly power of the fuel assembly itself is equivalent, so that the peripheral water gap widths can be set to be consistent. During the adjustment process, the peripheral water gap widths change synchronously, that is, four independent parameters are simplified into one adjustable parameter. For hexagonal fuel assemblies, the water gap widths in six directions change synchronously.

The assembly power of each fuel assembly is weakly correlated with the assembly power of other fuel assemblies, meaning that the assembly cross-section change caused by the water gap width of the current fuel assembly and the resulting power change will not have a significant impact on the power levels of other surrounding assemblies.

In the embodiment of the present application, three assumptions are taken, including the water gap width of each fuel assembly is related only to the fuel assembly itself, and has no correlation with the actual spacing between adjacent fuel assemblies; the influence of the water gap width of each fuel assembly in each direction on the assembly cross-section and an assembly power of the fuel assembly itself is equivalent; the assembly power of each fuel assembly is weakly correlated with the assembly powers of other fuel assemblies. In this method, the water gap width of each fuel assembly is related only to the fuel assembly itself, and this assumption allows the water gap width of each fuel assembly to be independently adjusted and optimized without considering the mutual influence with adjacent assemblies. Treating the water gaps in the four directions of a fuel assembly as the same variable with an equal magnitude change greatly simplifies computational effort. At the same time, by setting the water gap width to be consistent, the symmetry of the fuel assembly can be maintained, balancing its performance in all directions. The assembly power of each fuel assembly is weakly correlated with the assembly powers of other fuel assemblies, and this assumption allows the power of each fuel assembly to be independently adjusted and optimized without considering the mutual influence with other fuel assemblies.

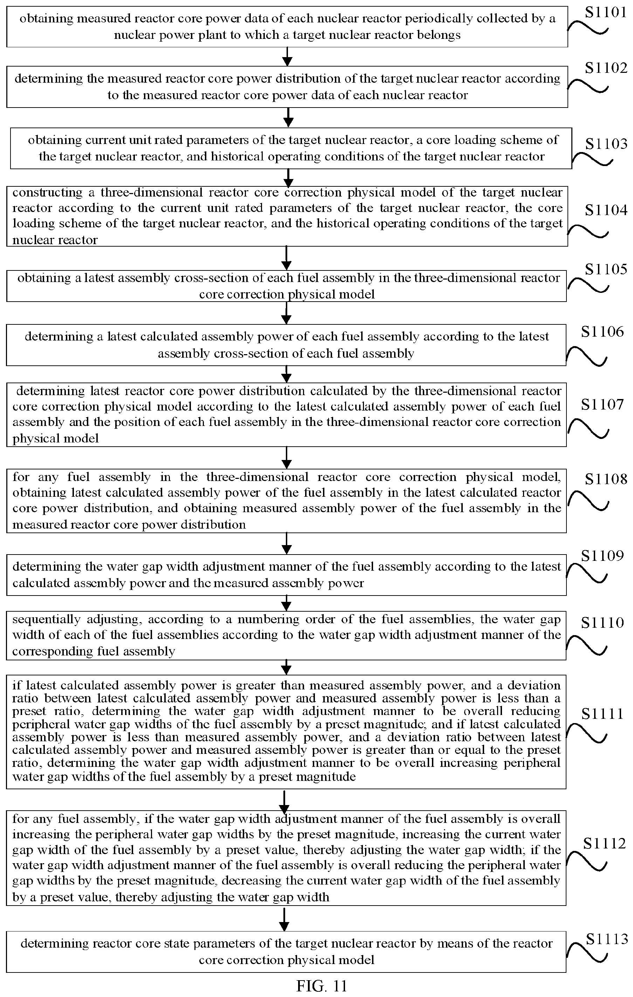

As shown in FIG. 11, in an embodiment, an embodiment of the present application further provides a reactor core state parameter determination method, including:
S1101, obtaining measured reactor core power data of each nuclear reactor periodically collected by a nuclear power plant to which a target nuclear reactor belongs.

S1102, determining the measured reactor core power distribution of the target nuclear reactor according to the measured reactor core power data of each nuclear reactor.

S1103, obtaining current unit rated parameters of the target nuclear reactor, a core loading scheme of the target nuclear reactor, and historical operating conditions of the target nuclear reactor.

S1104, constructing a three-dimensional reactor core correction physical model of the target nuclear reactor according to the current unit rated parameters of the target nuclear reactor, the core loading scheme of the target nuclear reactor, and the historical operating conditions of the target nuclear reactor.

S1105, obtaining a latest assembly cross-section of each fuel assembly in the three-dimensional reactor core correction physical model.

S1106, determining a latest calculated assembly power of each fuel assembly according to the latest assembly cross-section of each fuel assembly.

S1107, determining a latest reactor core power distribution calculated by the three-dimensional reactor core correction physical model according to the latest calculated assembly power of each fuel assembly and the position of each fuel assembly in the three-dimensional reactor core correction physical model.

S1108, for any fuel assembly in the three-dimensional reactor core correction physical model, obtaining a latest calculated assembly power of the fuel assembly in the latest calculated reactor core power distribution, and obtaining a measured assembly power of the fuel assembly in the measured reactor core power distribution.

S1109, determining the water gap width adjustment manner of the fuel assembly according to the latest calculated assembly power and the measured assembly power.

S1110, sequentially adjusting, according to a numbering order of the fuel assemblies, the water gap width of each of the fuel assemblies according to the water gap width adjustment manner of the corresponding fuel assembly.

S1111, if the latest calculated assembly power is greater than the measured assembly power, and a deviation ratio between the latest calculated assembly power and the measured assembly power is less than a preset ratio, determining the water gap width adjustment manner to be overall reducing peripheral water gap widths of the fuel assembly by a preset magnitude; and if the latest calculated assembly power is less than the measured assembly power, and a deviation ratio between the latest calculated assembly power and the measured assembly power is greater than or equal to the preset ratio, determining the water gap width adjustment manner to be overall increasing peripheral water gap widths of the fuel assembly by a preset magnitude.

S1112, for any fuel assembly, if the water gap width adjustment manner of the fuel assembly is overall increasing the peripheral water gap widths by the preset magnitude, increasing the current water gap width of the fuel assembly by a preset value, thereby adjusting the water gap width; if the water gap width adjustment manner of the fuel assembly is overall reducing the peripheral water gap widths by the preset magnitude, reducing the current water gap width of the fuel assembly by a preset value, thereby adjusting the water gap width.

S1113, calculating reactor core state parameters of the target nuclear reactor by means of the reactor core correction physical model.

The implementation principle and process of the technical solution in the embodiment are similar to the implementation principle and process of the technical solution described in the above method, and therefore the specific limitations thereof can be referred to the limitations of the reactor core state parameter determination method described above, which will not be repeated herein.

It should be understood that, although the respective steps in the flowcharts involved in the various embodiments described above are displayed sequentially in the direction of the arrows, these steps are not necessarily performed sequentially in the order indicated by the arrows. Unless explicitly described herein, there is no strict sequential limitation on the execution of these steps, and these steps can be performed in other orders. Moreover, at least some of the steps in the flowcharts involved in the various embodiments described above can include multiple steps or multiple stages, and these steps or stages are not necessarily completed at the same moment, but can be performed at different moments. The execution order of these steps or stages is also not necessarily sequential, but they can be performed alternately or in turn with other steps or at least a portion of steps or stages of the other steps.

Based on the same inventive concept, an embodiment of the present application further provides a reactor core state parameter determination apparatus for implementing the reactor core state parameter determination method described above. The implementation solution provided by the apparatus for solving the problem is similar to the implementation solution described in the above method, and therefore the specific limitations in one or more embodiments of the reactor core state parameter determination apparatus provided below can be referred to the limitations of the reactor core state parameter determination method described above, which will not be repeated herein.

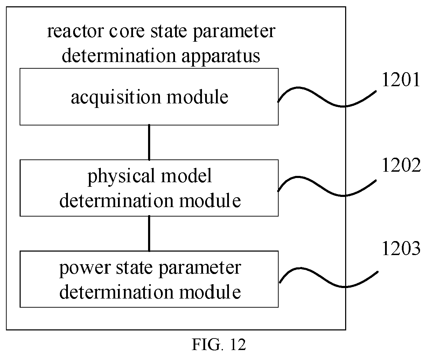

In an embodiment, as shown in FIG. 12, a reactor core state parameter determination apparatus is provided. The apparatus includes: an acquisition module 1201, a physical model determination module 1202, and a power state parameter determination module 1203.

The acquisition module 1201 is configured to obtain a measured reactor core power distribution of a target nuclear reactor.

The physical model determination module 1202 is configured to adjust a water gap width of each fuel assembly in a three-dimensional reactor core correction physical model of the target nuclear reactor according to the measured reactor core power distribution to obtain a reactor core correction physical model of the target nuclear reactor; wherein a deviation between a reactor core power distribution calculated by the reactor core correction physical model and the measured reactor core power distribution is less than a preset value.

The power state parameter determination module 1203 is configured to determine reactor core state parameters of the target nuclear reactor by means of the reactor core correction physical model.

In an embodiment, the acquisition module 1201 includes:
a first acquisition unit, configured to obtain measured reactor core power data of each nuclear reactor periodically collected by a nuclear power plant to which the target nuclear reactor belongs; and
a first determination unit, configured to determine the measured reactor core power distribution of the target nuclear reactor according to the measured reactor core power data of each nuclear reactor.

In an embodiment, the physical model determination module 1202 includes:
a first adjustment unit, configured to perform a water gap width adjustment step according to the measured reactor core power distribution, thereby adjusting the water gap width of each fuel assembly in the three-dimensional reactor core correction physical model; and
a second adjustment unit, configured to, if a deviation between a reactor core power distribution calculated by the adjusted three-dimensional reactor core correction physical model and the measured reactor core power distribution is greater than or equal to the preset value, re-perform the water gap width adjustment step until the deviation between a reactor core power distribution calculated by the adjusted three-dimensional reactor core correction physical model and the measured reactor core power distribution is less than the preset value, and stop the adjustment.

In an embodiment, the apparatus further includes:
an assembly power acquisition module, configured to obtain, for any fuel assembly in the three-dimensional reactor core correction physical model, a latest calculated assembly power of the fuel assembly in the latest calculated reactor core power distribution, and obtain a measured assembly power of the fuel assembly in the measured reactor core power distribution; and
an adjustment manner determination module, configured to determine a water gap width adjustment manner of the fuel assembly according to the latest calculated assembly power and the measured assembly power.

In an embodiment, the physical model determination module 1202 is further configured to:
if the latest calculated assembly power is greater than the measured assembly power, and a deviation ratio between the latest calculated assembly power and the measured assembly power is greater than or equal to a preset ratio, determine the water gap width adjustment manner to be overall reducing peripheral water gap widths of the fuel assembly by a preset magnitude; and
if the latest calculated assembly power is less than the measured assembly power, and the deviation ratio between the latest calculated assembly power and the measured assembly power is less than the preset ratio, determine the water gap width adjustment manner to be overall increasing peripheral water gap widths of the fuel assembly by a preset magnitude.

In an embodiment, the adjustment manner determination module includes:
a first adjustment unit, configured to, for any fuel assembly, if the water gap width adjustment manner of the fuel assembly is overall increasing the peripheral water gap widths by the preset magnitude, increase the current water gap width of the fuel assembly by a preset value, thereby adjusting the water gap width;
a second adjustment unit, configured to, if the water gap width adjustment manner of the fuel assembly is overall reducing the peripheral water gap widths by the preset magnitude, decrease the current water gap width of the fuel assembly by a preset value, thereby adjusting the water gap width.

In an embodiment, the apparatus further includes:
a first acquisition module, configured to obtain current unit rated parameters of the target nuclear reactor, a core loading scheme of the target nuclear reactor, and historical operating conditions of the target nuclear reactor; and
a construction module, configured to construct the three-dimensional reactor core correction physical model of the target nuclear reactor according to the current unit rated parameters of the target nuclear reactor, the core loading scheme of the target nuclear reactor, and the historical operating conditions of the target nuclear reactor.

The respective modules in the above reactor core state parameter determination apparatus can be implemented entirely or partially through software, hardware, or a combination thereof. The respective modules can be embedded in or independent of the processor in the computer device in the form of hardware, or can be stored in the memory in the computer device in the form of software, so that the processor can call and execute the operations corresponding to the respective modules above.

In an embodiment, a computer device is provided, including a memory and a processor, the memory having a computer program stored therein, wherein when the processor executes the computer program, steps of the various method embodiments described above are implemented.

The implementation principle and technical effects of the computer device provided in the above embodiment are similar to those of the method embodiment described above, which will not be repeated herein.

In an embodiment, a computer-readable storage medium is provided, having a computer program stored therein, wherein when a processor executes the computer program, the technical solutions in the various method embodiments described above are implemented.

The implementation principle and technical effects of the computer-readable storage medium provided in the above embodiment are similar to those of the method embodiment described above, which will not be repeated herein.

In an embodiment, a computer program product is provided, including a computer program, and when a processor executes the computer program, the technical solutions in the various method embodiments described above are implemented.

The implementation principle and technical effects of the computer program product provided in the above embodiment are similar to those of the method embodiment described above, which will not be repeated herein.

It should be noted that the data involved in the present application, including but not being limited to data for analysis, stored data, displayed data, etc., are all information or data that has been fully authorized by all relevant parties.

Those of ordinary skill in the art can understand that all or part of the processes in the methods of the above embodiments can be implemented by instructing relevant hardware through a computer program. The computer program can be stored in a non-volatile computer-readable storage medium. When the computer program is executed, it can include the processes of the methods in the above embodiments. Any reference to a memory, a database, or other media used in the embodiments provided in the present application can include at least one of non-volatile memory or volatile memory. Non-volatile memory can include Read-Only Memory (ROM), magnetic tape, floppy disk, flash memory, optical memory, high-density embedded non-volatile memory, Resistive Random-Access Memory (ReRAM), Magnetoresistive Random Access Memory (MRAM), Ferroelectric Random-Access Memory (FRAM), Phase Change Memory (PCM), graphene memory, etc. Volatile memory can include Random Access Memory (RAM) or external cache memory, etc. By way of illustration and not limitation, RAM can take multiple forms, such as Static Random-Access Memory (SRAM) or Dynamic Random-Access Memory (DRAM), etc. The databases involved in the embodiments provided in the present application can include at least one of a relational database or a non-relational database. Non-relational databases can include blockchain-based distributed databases, etc., but are not limited thereto. The processors involved in the embodiments provided in the present application can be general-purpose processors, central processing units, graphics processing units, digital signal processors, programmable logic controllers, data processing logic controllers based on quantum computing, etc., but are not limited thereto.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A reactor core state parameter determination method, comprising:
obtaining a measured reactor core power distribution of a target nuclear reactor;
adjusting a water gap width of each fuel assembly in a three-dimensional reactor core correction physical model of the target nuclear reactor according to the measured reactor core power distribution to obtain a reactor core correction physical model of the target nuclear reactor, wherein a deviation between a reactor core power distribution calculated by the reactor core correction physical model and the measured reactor core power distribution is less than a preset value; and
determining reactor core state parameters of the target nuclear reactor by means of the reactor core correction physical model.

2. The method according to claim 1, wherein obtaining a measured reactor core power distribution of the target nuclear reactor comprises:
obtaining measured reactor core power data of each nuclear reactor periodically collected by a nuclear power plant to which the target nuclear reactor belongs; and
determining the measured reactor core power distribution of the target nuclear reactor according to the measured reactor core power data of each nuclear reactor.

3. The method according to claim 2, wherein the measured reactor core power data comprises a fuel temperature, a coolant temperature, pressure data at different positions of the nuclear reactor, or flow rate data of the coolant.

4. The method according to claim 1, wherein adjusting the water gap width of each fuel assembly in the three-dimensional reactor core correction physical model of the target nuclear reactor according to the measured reactor core power distribution comprises:
performing a water gap width adjustment step according to the measured reactor core power distribution, thereby adjusting the water gap width of each fuel assembly in the three-dimensional reactor core correction physical model;
wherein if a deviation between a reactor core power distribution calculated by the adjusted three-dimensional reactor core correction physical model and the measured reactor core power distribution is greater than or equal to the preset value, re-performing the water gap width adjustment step until the deviation between the reactor core power distribution calculated by the adjusted three-dimensional reactor core correction physical model and the measured reactor core power distribution is less than the preset value, and stopping the adjustment.

5. The method according to claim 4, wherein the water gap width adjustment step comprises:
obtaining a latest reactor core power distribution calculated by the three-dimensional reactor core correction physical model;
determining a water gap width adjustment manner of each fuel assembly in the three-dimensional reactor core correction physical model according to the latest calculated reactor core power distribution and the measured reactor core power distribution; and
sequentially adjusting, according to a numbering order of fuel assemblies, a water gap width of each of the fuel assemblies according to the water gap width adjustment manner of the corresponding fuel assembly.

6. The method according to claim 5, wherein determining the water gap width adjustment manner of each fuel assembly in the three-dimensional reactor core correction physical model according to the latest calculated reactor core power distribution and the measured reactor core power distribution comprises:
for any fuel assembly in the three-dimensional reactor core correction physical model, obtaining a latest calculated assembly power of the fuel assembly in the latest calculated reactor core power distribution, and obtaining a measured assembly power of the fuel assembly in the measured reactor core power distribution; and
determining a water gap width adjustment manner of the fuel assembly according to the latest calculated assembly power and the measured assembly power.

7. The method according to claim 6, wherein determining the water gap width adjustment manner of the fuel assembly according to the latest calculated assembly power and the measured assembly power comprises:
if the latest calculated assembly power is greater than the measured assembly power, and a deviation ratio between the latest calculated assembly power and the measured assembly power is greater than or equal to a preset ratio, determining the water gap width adjustment manner to be overall reducing peripheral water gap widths of the fuel assembly by a preset magnitude; and
if the latest calculated assembly power is less than the measured assembly power, and a deviation ratio between the latest calculated assembly power and the measured assembly power is less than the preset ratio, determining the water gap width adjustment manner to be overall increasing peripheral water gap widths of the fuel assembly by a preset magnitude.

8. The method according to any one of claims 1 to 7, wherein before the adjusting the water gap width of each fuel assembly in the three-dimensional reactor core correction physical model of the target nuclear reactor according to the measured reactor core power distribution, the method further comprises:
obtaining current unit rated parameters of the target nuclear reactor, a core loading scheme of the target nuclear reactor, and historical operating conditions of the target nuclear reactor; and
constructing the three-dimensional reactor core correction physical model of the target nuclear reactor according to the current unit rated parameters of the target nuclear reactor, the core loading scheme of the target nuclear reactor, and the historical operating conditions of the target nuclear reactor.

9. The method according to any one of claims 1 to 7, wherein the three-dimensional reactor core correction physical model is a mathematical model configured to describe and analyze three-dimensional structures and physical processes inside a nuclear reactor.

10. The method according to any one of claims 1 to 7, wherein the fuel assembly is an entire group of fuel elements assembled together.

11. The method according to claim 10, wherein the fuel assembly comprises fuel elements, a top nozzle, a bottom nozzle, a control rod, a guide thimble, and spacer grids.

12. The method according to any one of claims 1 to 7, wherein different reactors use different fuel elements.

13. A reactor core state parameter determination apparatus, comprising:
an acquisition module, configured to obtain a measured reactor core power distribution of a target nuclear reactor;
a physical model determination module, configured to adjust a water gap width of each fuel assembly in a three-dimensional reactor core correction physical model of the target nuclear reactor according to the measured reactor core power distribution to obtain a reactor core correction physical model of the target nuclear reactor; wherein a deviation between a reactor core power distribution calculated by the reactor core correction physical model and the measured reactor core power distribution is less than a preset value; and
a power state parameter determination module, configured to determine reactor core state parameters of the target nuclear reactor by means of the reactor core correction physical model.

14. The apparatus according to claim 13, wherein the acquisition module comprises:
a first acquisition unit, configured to obtain measured reactor core power data of each nuclear reactor periodically collected by a nuclear power plant to which the target nuclear reactor belongs; and
a second acquisition unit, configured to determine the measured reactor core power distribution of the target nuclear reactor according to the measured reactor core power data of each nuclear reactor.

15. The apparatus according to claim 13, wherein the physical model determination module comprises:
a first adjustment unit, configured to perform a water gap width adjustment step according to the measured reactor core power distribution, thereby adjusting the water gap width of each fuel assembly in the three-dimensional reactor core correction physical model; and
a second adjustment unit, configured to, if a deviation between a reactor core power distribution calculated by the adjusted three-dimensional reactor core correction physical model and the measured reactor core power distribution is greater than or equal to the preset value, re-perform the water gap width adjustment step until the deviation between a reactor core power distribution calculated by the adjusted three-dimensional reactor core correction physical model and the measured reactor core power distribution is less than the preset value, and stop the adjustment.

16. The apparatus according to claim 13, further comprising:
an assembly power acquisition module, configured to obtain, for any fuel assembly in the three-dimensional reactor core correction physical model, a latest calculated assembly power of the fuel assembly in the latest calculated reactor core power distribution, and obtain a measured assembly power of the fuel assembly in the measured reactor core power distribution; and
an adjustment manner determination module, configured to determine a water gap width adjustment manner of the fuel assembly according to the latest calculated assembly power and the measured assembly power.

17. The apparatus according to claim 16, wherein the physical model determination module is further configured to:
if the latest calculated assembly power is greater than the measured assembly power, and a deviation ratio between the latest calculated assembly power and the measured assembly power is greater than or equal to a preset ratio, determine the water gap width adjustment manner to be overall reducing peripheral water gap widths of the fuel assembly by a preset magnitude; and
if the latest calculated assembly power is less than the measured assembly power, and the deviation ratio between the latest calculated assembly power and the measured assembly power is less than the preset ratio, determine the water gap width adjustment manner to be overall increasing peripheral water gap widths of the fuel assembly by a preset magnitude.

18. The apparatus according to claim 13, further comprising:
a first acquisition module, configured to obtain current unit rated parameters of the target nuclear reactor, a core loading scheme of the target nuclear reactor, and historical operating conditions of the target nuclear reactor; and
a construction module, configured to construct the three-dimensional reactor core correction physical model of the target nuclear reactor according to the current unit rated parameters of the target nuclear reactor, the core loading scheme of the target nuclear reactor, and the historical operating conditions of the target nuclear reactor.

19. A computer device, comprising a memory and a processor, the memory having a computer program stored therein, wherein when the processor executes the computer program, steps of the method according to any one of claims 1 to 12 are implemented.

20. A computer-readable storage medium, having a computer program stored therein, wherein when a processor executes the computer program, steps of the method according to any one of claims 1 to 12 are implemented.
